# EUROPÄISCHE PATENTANMELDUNG

(11) **EP 1 095 976 A1**
(43) Veröffentlichungstag der Anmeldung: **02.05.2001**
(21) Anmeldenummer: 00122972.3
(22) Anmeldetag: 23.10.2000
(51) Int. Cl.: C08K 7/14, C08K 3/00, C08L 23/10, C08L 77/00

(54) **Gefärbte langfaserverstärkte Polyolefin-Kunststoff Struktur und daraus hergestellte Formkörper**

(30) Priorität: 29.10.1999 DE 19952461
(71) Anmelder: Ticona GmbH, 65451 Kelsterbach (DE)
(72) Erfinder: Bernd, Heinz, 64646 Heppenheim (DE); Borgner, Thomas, 65747 Bischofsheim (DE); Heydweiller, Joachim, 65428 Ruesselsheim (DE); Thomas, Gabriele, 64807 Dieburg (DE)

(57) **Zusammenfassung**

Die vorliegende Erfindung betrifft gefärbte langfaserverstärkte Polyolefin-Kunststoff Struktur mit einer Länge von ≥ 3 mm, enthaltend 0.1 Gew.-% bis 90 Gew.-% mindestens eines Polyolefin-Kunststoffes, 0.1 Gew.-% bis 50 Gew.-% mindestens eines Polyamid-Kunststoffes, 0.1 Gew.-% bis 15 Gew.-% mindestens eines modifizierten Polyolefin-Kunststoffes, 5.0 Gew.-% bis 75 Gew.-% mindestens eines Verstärkungsfasers, 0.1 Gew.-% bis 5.0 Gew.-% mindestens eines Farbstoffes und/oder Pigments. Weiter betrifft die vorliegende Erfindung ein Verfahren zur Herstellung einer gefärbten langfaserverstärkten Polyolefin-Kunststoff Struktur, wobei Faserbündel durch eine flache Düse geführt werden, die mit einer Schmelze aus Polyolefin, Polyamid, modifizierten Polyolefin und Farbstoff und/oder Pigment gefüllt ist, die eingetauchten Faserbündel über eine Formdüse geführt werden, die Faserbündel gekühlt werden und die Faserbündel quer zur Laufrichtung auf die Länge der Struktur geschnitten werden. Schließlich betrifft die vorliegende Erfindung einen geformten Gegenstand aus gefärbten langfaserverstärkten Polyolefin-Kunststoff Struktur hergestellt durch Spritzguß, Extrusion, Blasformen oder Plastifizierpressen. Die vorliegende Erfindung betrifft auch die Verwendung einer gefärbten langfaserverstärkten Polyolefin-Kunststoff Struktur zur Herstellung von gefärbten Formteilen im Innenbereich und Außenbereich von Kraftfahrzeugen.

## Beschreibung

Die vorliegende Erfindung betrifft eine gefärbte langfaserverstärkte Polyolefin-Kunststoff Struktur und daraus hergestellte Formkörper mit sehr guter Schlagzähigkeit und hoher Wärmeformbeständigkeit (HDT).

Polyolefin-Kunststoffe, insbesondere solche, die Polyethylen und Polypropylen umfassen, sind kostengünstige thermoplastische Kunststoffe mit einem leichten spezifischen Gewicht, guter Schmelzbarkeit sowie widerstandsfähig gegen chemische Einflüsse. Diese werden daher vielfach in Bereichen, wie allgemeine Haushaltsartikel, elektrischen und elektronischen Teilen verwendet. Polyolefin-Kunststoffe weisen jedoch gewöhnlich niedrige Wärmeformbeständigkeit (HDT) und niedrige mechanische Eigenschaften auf. Daher sind diese Kunststoffe für die Verwendung in Bereichen nicht geeignet, wo hohe Wärmeformbeständigkeit und hohe mechanische Festigkeit benötigt werden.

Es war bekannt, zur Verbesserung der Festigkeit eines Polyolefin-Kunststoffes, einer Verstärkungsfaser wie Glasfaser mit dem Polyolefin-Kunststoff zu mischen. Gewöhnlich wurde eine faserverstärkte Polyolefin-Kunststoffzusammensetzung erhalten, in dem ein Polyolefin-Kunststoff mit kurzen Verstärkungsfasern gemischt wurde und dann das Gemisch in einem Extruder extrudiert wurde. Dieses Verfahren weist jedoch den Nachteil auf, daß die Fasern beim Mahlen im Extruder brechen. Dieses Verfahren kann daher nicht die Erfordernis nach höherer mechanischer Festigkeit erfüllen.

Es war auch bekannt ein Polyolefin-Kunststoff mit langen Fasern zu verstärken, wobei die Eigenschaft der Verstärkungsfasern auf das zu mischenden Polyolefin angewendet wird. Solch eine langfaserverstärkte Polyolefin Struktur kann zum Beispiel erhalten werden, in dem eine kontinuierlich abgewickelte Verstärkungsfaser in eine Emulsion oder eine Lösung eines Polyolefin-Kunststoffes oder in eine Polyolefin-Kunststoffschmelze getaucht wird. Der langfaserverstärkte Polyolefin-Kunststoff zeigt verglichen mit dem vorstehend beschriebenen kurzfaserverstärkten Polyolefin-Kunststoff gute mechanische Eigenschaften.

Obwohl in der Automobilindustrie und ähnlichen Bereichen noch höhere Schlagzähigkeit gefordert wird, können übliche langfaserverstärkte Polyolefin-Kunststoffe dieses Erfordernis nicht erfüllen. Um die Stoßfestigkeit weiter zu verbessern, ist es möglich, einen anderen thermoplastischen Kunststoff mit sehr guter Stoßfestigkeit mit dem langfaserverstärkten Polyolefin-Kunststoff zu mischen. Es können jedoch keine Produkte mit praktisch verwendbaren mechanischen Eigenschaften durch bloßes Mischen des Polyolefin-Kunststoffes mit einem anderen Kunststoff erhalten werden. Das ist anscheinend in der geringen Dispersibilität der Kunststoffe untereinander begründet.

Aus US-A 5,409,763 ist eine stabförmige langfaserverstärkte Polyolefin-Struktur mit einer Länge von mindestens 3 mm bekannt, welche hergestellt wird durch Mischen von 100 Gewichtsteilen einer Kunststoffkomponente umfassend 99 bis 50 Gewichtsteile eines Polyolefin-Kunststoffes und 1 bis 50 Gewichtsteile eines Polyamid-Kunststoffes mit 10 bis 200 Gewichtsteilen einer Verstärkungsfaser. Die Verstärkungsfaser hat die gleiche Länge wie die Struktur und ist im wesentlichen parallel zur Längsrichtung angeordnet. Weiter ist daraus ein Gegenstand bekannt, der aus einem solchen stabförmigen langfaserverstärkten Polyolefin-Kunststoff geformt ist. Die Verstärkungsfaser ist im Polyamid mit einer durchschnittlichen Faserlänge von mindestens 1 mm dispergiert, wobei sich der Polyolefin-Kunststoff sowie der Polyamid-Kunststoff durchdringen, um eine vernetzte Dispersion zu formen.

Es wird ein Polyamid als Kunststoff verwendet, das den Polyolefin-Kunststoff bezüglich Festigkeit überragt und bezüglich der Oberflächenspannung zwischen dem Polyolefin-Kunststoff und Verstärkungsfaser, wie Glasfaser, liegt. Es wird eine stabförmige Struktur durch Schmelzemischen des Polyolefin-Kunststoffes mit dem Polyamid-Kunststoff und Eintauchen der Verstärkungsfasers in die Schmelze und Formen der stabförmigen Struktur hergestellt. Daraus wird ein Formkörper mit einer extrem hohen Schlagzähigkeit erhalten. Darin bildet der Polyamid-Kunststoff mit der Verstärkungsfaser und formt gleichzeitig mit dem Polyolefin-Kunststoff eine Netzwerkstruktur aus. Diese Netzwerkstruktur wird weiter mit der Zunahme der Faserlänge verbessert.

Es ist bekannt, bevorzugt ein modifiziertes Polyolefin zu verwenden, da es funktionale Gruppen trägt, die eine hohe Affinität für den Polyamid-Kunststoff haben. Dadurch wird die Affinität zwischen dem Polyolefin-Kunststoff und dem Polyamid-Kunststoff erhöht und dadurch die Fähigkeit zur Ausbildung der Netzwerkstruktur verbessert. Wenn der Anteil an modifiziertem Polyolefin weniger als 1 Gew.-% beträgt kann der Effekt nicht einsetzen. Wenn der Anteil 50 Gew.-% übersteigt, steigt die Viskosität der Zusammensetzung an, was zu Schwierigkeiten bei der Formgebung führen kann.

Der Polyolefin-Kunststoff kann durch Polymerisation einer α-Olefins Verbindung, wie Ethylen oder Propylen, mit einem geeigneten Katalysator hergestellt werden.

Als Polyamid-Kunststoff können verschiedene bekannte Polyamide verwendet werden. Wenn der Anteil an Polyamid-Kunststoff im Gemisch kleiner als 1 % ist, kann keine wirksame Verbesserung der Schlagzähigkeit erreicht werden. Wenn der Anteil 50 % übersteigt, entsteht das Problem, daß die räumliche Änderung des Formkörpers aufgrund der Wasserabsorption vergrößert wird.

Wenn der Anteil an Verstärkungsfaser weniger als 10 Gewichtsteile beträgt, wird nur ein geringer Verstärkungseffekt durch die Faser erreicht. Wenn der Anteil an Verstärkungsfaser 200 Gewichtsteile übersteigt, wird die Herstellung der stabförmigen Struktur erschwert oder die Fähigkeit zur Verarbeitung zu einem Formkörper erheblich verschlechtert.

Es sind Zusammensetzungen aus Polyolefin-Kunststoff, Polyamid-Kunststoff, modifiziertes Polyolefin und Glasfaser aus dem Stand der Technik bekannt. Diese Zusammensetzungen werden unter anderem in JP-A 03126740, JP-A 03124748, GB-A 2225584, JP-A 02107664, JP-A 01087656, JP-A 01066268, JP-A 63305148, JP-B 06018929, JP-A 60104136, JP-B 61026939, JP-A 56030451, JP-A 6322266, JP-A 7053861 und JP-A 6234896 beschrieben.

Für viele Anwendungen wird eine gefärbte langfaserverstärkte Polyolefin-Kunststoff Struktur gefordert. Die Zugabe von mindestens einem Farbstoff und/oder Pigment auch in kleinen Mengen hat auf die mechanische Eigenschaften des Polyolefin-Kunststoffes erhebliche Auswirkungen. Es ist bekannt, daß Pigmente in glasfaserverstärkten Kunststoffen die Verstärkungsfaser mechanisch schädigen und hierdurch eine erhebliche Verschlechterung der mechanischen Eigenschaften bewirkt wird.

Die Aufgabe der vorliegenden Erfindung besteht darin, eine gefärbte langfaserverstärkte Polyolefin-Kunststoff Struktur mit sehr guten mechanischen Eigenschaften, guter Wärmebeständigkeit und geringer Wasserabsorption und ein umweltfreundliches und wirtschaftliches Verfahren zu deren Herstellung und deren Verwendung zur Herstellung von Formkörpern bereitzustellen.

Die Aufgabe der vorliegenden Erfindung wird gelöst durch eine gefärbte langfaserverstärkte Polyolefin-Kunststoff Struktur mit einer Länge von ≥ 3 mm, die
a) 0.1 Gew.-% bis 90 Gew.-% mindestens eines Polyolefin-Kunststoffes,
b) 0.1 Gew.-% bis 50 Gew.-% mindestens eines Polyamid-Kunststoffes,
c) 0.1 Gew.-% bis 15 Gew.-% mindestens eines modifizierten Polyolefin-Kunststoffes,
d) 5.0 Gew.-% bis 75 Gew.-% mindestens einer Verstärkungsfaser,
e) 0.1 Gew.-% bis 5.0 Gew.-% mindestens eines Farbstoffes und/oder Pigments enthält.

Die vorliegende Erfindung ist gekennzeichnet durch die Verwendung mindestens eines Farbstoffes und/oder Pigments. Das so erhaltene gefärbte langfaserverstärkte Polymergemisch weist trotz Zugabe mindestens eines Farbstoffes und/oder Pigments unerwartet und überraschend sehr gute mechanische Eigenschaften, sehr gute Wärmeformbeständigkeit und geringe Wasserabsorption auf. Als Pigment verwendbar sind zum Beispiel Titandioxid (Weißpigment), Eisenoxid, Sachtolit HDS (Rotpigmente), Ruß, Renolschwarz VE (Schwarzpigmente), Sicotangelb 2112 (Gelbpigment) sowie Kobaltgrün 7911 (Grünpigment). Als Pigment weiter verwendbar sind ebenfalls die in Saechtling, Kunststoff-Taschenbuch, Hanser Verlag, 27. Ausgabe, auf den Seiten 764-766 beschriebenen Pigmente, worauf Bezug genommen wird. Die Pigmente können auch in Form von Pigmentkonzentraten, wie Pigmentpasten oder Masterbatchen zugefügt werden.

Eine bevorzugte Ausgestaltung der Erfindung ist eine gefärbte langfaserverstärkte Polyolefin-Kunststoff Struktur, die
a) 4.0 Gew.-% bis 70 Gew.-% mindestens eines Polyolefin-Kunststoffes,
b) 1.0 Gew.-% bis 40 Gew.-% mindestens eines Polyamid-Kunststoffes,
c) 0.8 Gew.-% bis 13 Gew.-% mindestens eines modifizierten Polyolefin-Kunststoffes,
d) 10 Gew.-% bis 65 Gew.-% mindestens eines Verstärkungsfasers,
e) 0.15 Gew.-% bis 3.0 Gew.-% mindestens eines Farbstoffes und/oder Pigments enthält.

Diese Zusammensetzung weist hervorragende mechanische Eigenschaften, Wärmeformbeständigkeit und sehr geringe Wasserabsorption auf.

Eine besonders bevorzugte Ausgestaltung der Erfindung ist eine gefärbte langfaserverstärkte Polyolefin-Kunststoff Struktur, die
a) 30 Gew.-% bis 58 Gew.-% mindestens eines Polyolefin-Kunststoffes,
b) 4.0 Gew.-% bis 30 Gew.-% mindestens eines Polyamid-Kunststoffes,
c) 1.5 Gew.-% bis 10 Gew.-% mindestens eines modifizierten Polyolefin-Kunststoffes,
d) 19 Gew.-% bis 58 Gew.-% mindestens einer Verstärkungsfaser,
e) 0.2 Gew.-% bis 2.5 Gew.-% mindestens eines Farbstoffes und/oder Pigments enthält.

Diese Zusammensetzung weist ganz hervorragende mechnische Eigenschaften, Wärmeformbeständigkeit und sehr geringe Wasserabsorption auf.

In weiteren vorteilhaften Ausgestaltungen der Erfindung kann die gefärbte langfaserverstärkte Struktur
a) 0.1 Gew.-% bis 24 Gew.-% oder 80 Gew.-% bis 90 Gew.-% mindestens eines Polyolefin-Kunststoffes,
b) 12.5 Gew.-% bis 50 Gew.-% mindestens eines Polyamid-Kunststoffes,
c) 0.1 Gew.-% bis 0.5 Gew.-% oder 12.5 Gew.-% - 15 Gew.-% mindestens eines modifizierten Polyolefin-Kunststoffes,
d) 5 Gew.-% bis 16 Gew.-% oder 50 bis 75 Gew.-% mindestens einer Verstärkungsfaser,
e) 0.1 Gew.-% bis 5 Gew.-% mindestens eines Farbstoffes und/oder Pigments enthalten.

Diese Zusammensetzungen weisen hervorragende mechanischen Eigenschaften, Wärmeformbeständigkeiten und sehr geringe Wasserabsorption auf.

Erfindungsgemäß kann das Polyolefin-Kunststoff (a) erhalten werden durch Additionspolymerisation eines α-Olefins, wie Ethylen oder Propylen mit einem geeigneten Katalysator. Beispiele für das Polyolefin-Kunststoff (a) sind Homopolymere mit hoher, mittlerer und niedriger Dichte, wie Polyethylen, Polypropylen, Polymethylpenten und Copolymere dieser Polymere. Die Homopolymer und Copolymere können gradkettig und verzweigt vorliegen. Bei der Verzweigung gibt es keine Beschränkung so lange die Verformbarkeit gegeben ist. Ein Gemisch aus zwei und mehreren dieser Polymere können verwendet werden. Erfindungsgemäß wird bevorzugt Polypropylen als Polyolefin-Kunststoff verwendet.

Als der Polyamid-Kunststoff (b) könne erfindungsgemäß verschieden Polyamide verwendet werden. Beispiele sind Polyamide, die erhalten werden durch Polykondensation von Dicarbonsäuren, wie Oxalsäure, Adipinsäure, Suberinsäure, Sebacinsäure, Terephthalsäure, Isophthalsäure oder 1,4-Cyclohexyldicarbonsäure mit einem Diamin, wie Ethylendiamin, Pentamethylendiamin, hexamethylendiamin, Decamethylendiamin, 1,4-Cyclohexyldiamin oder m-Xyloldiamin, Polyamidverbindungen erhalten durch Polymerisation von cyclischem Lactam, wie Caprolactam oder Laurolactam und Polyamide erhalten durch Copolymerisation von cyclischem Lactam und einem Dicarbonsäuresalz mit einem Diamin. Erfindungsgemäß sind Nylon 6 (Polyamid 6), Nylon 66 (Polyamid 66) und Copolymere davon bevorzugt. Erfindungsgemäß ist der Polyamid-Kunststoff (b) Nylon 6 besonders bevorzugt. Nylon 6 weist eine Wärmeformbeständigkeit (HDT), die höher ist als beim Polyolefin-Kunststoff (a). Durch den Zusatz von Nylon 6 wird die HDT und zusätzlich die Schlagzähigkeit des Gemisches erhöht.

Erfindungsgemäß enthält das modifizierte Polyolefin (c) mindestens eine der folgenden Gruppen wie Carboxyl-, Carboxylanhydrid-, Metalcarboxylat-, Carboxylester-, Imino-, Amino- oder Epoxygruppe. Beispiele für den modifizierten Polyolefin-Kunststoff umfassen modifizierte Polyolefin Copolymere oder gepfropfte Copolymere, die hergestellt werden in dem chemisch folgende beispielhaft aufgeführte Verbindungen, wie Maleinsäureanhydrid, Fumarsäureanhydrid, Zitronensäureanhydrid, N-Phenylmaleimid, N-Cyclohexylmaleinimid, Glyicidylacrylat, Glycidylmethacrylat, Glycidylvinylbenzoat, N-[4-(2,3-epoxpropoxy)-3,5-dimethylbenzyl]acrylamid (AXE), Alkylmethacrylate und/oder Derivate davon in Polyolefine, wie Polypropylen, Polyethylen oder Ethylen/Propylen-Copolymere und in Polyamid gepfropfte Polyolefine eingeführt werden. Das modifizierte Polyolefin ist im Polymerisationsgrad nicht beschränkt, es kann auch ein Oligomer sein. Besonders bevorzugte modifizierte Polyolefine sind
Maleinsäureanhydrid-modifiziertes Polyethylen,
Maleinsäureanhydrid-modifiziertes Polypropylen,
Maleinsäureanhydrid-modifiziertes Polyethylen/Polypropylen-Copolymer,
Fumarsäureanhydrid-modifiziertes Polyethylen,
Fumarsäureanhydrid-modifiziertes Polypropylen,
Fumarsäureanhydrid-modifiziertes Polyethylen/Polypropylen-Copolymer,
Glycidylmethacrylat-modifiziertes Polyethylen,
Glycidylmethacrylat-modifiziertes Polypropylen,
AXE-modifiziertes Polyethylen,
AXE-modifiziertes Polypropylen und
Polyamid gepfropfte Polyolefine.

Erfindungsgemäß ist die Verstärkungsfaser (d) nicht beschränkt auf ein bestimmtes Material. Beispiele für Verstärkungsfaser mit hohem Schmelzpunkt (Erweichungspunkt), wie Glasfaser, Kohlefaser, Metallfaser und aromatische Polyamidfaser können verwendet werden. Erfindungsgemäß werden bevorzugt Glasfaser verwendet. Bei Glasfasern werden gewöhnlich Bündel mit einem Faserdurchmesser von 8 µm bis 25 µm und einem Gewicht von 500 g bis 4400 g pro 1000 m verwendet. Die Faser können in an sich bekannter Weise oberflächenbehandelt sein.

Die Faserbündel werden erhalten, in dem eine Anzahl von Fasern genommen und mit einer wäßrigen Lösung oder wäßrigen Emulsion eines Schlichtesystems behandelt und dann gebündelt werden. Bevorzugt werden aufgewickelte Faserbündel verwendet, die gebündelt, getrocknet und auf Spulen aufgewickelt werden (Direkt-Roving). Es ergeben sich im wesentlichen endlos geformte Faserbündel.

Es können in der Polyolefin-Kunststoffstruktur zusätzlich bekannte Additive, wie Gleitmittel, Farbstoffe, Pigmente, Antioxidantien, Wärmestabilisatoren, Lichtstabilisatoren, Lichtschutzadditive, Verstärker und Hydrolysestabilisatoren enthalten sein.

Gemäß der Erfindung wird die gefärbte langfaserverstärkte Polyolefin-Kunststoff Struktur bevorzugt nach dem Pultrusions-Verfahren hergestellt, wobei
I) Faserbündel durch eine flache Düse, die mit einer Schmelze aus Polyolefin (a), Polyamid (b), modifizierten Polyolefin (c) und Farbstoff und/oder Pigment (e) gefüllt ist, geführt werden,
II) die eingetauchten Faserbündel über eine Formdüse geführt werden,
III) die Faserbündel gekühlt werden,
IV) die Faserbündel nachgeformt werden und
V) die Faserbündel quer zur Laufrichtung auf die Länge der Struktur geschnitten oder als endlose Struktur aufgewickelt werden.

Bei dem erfindungsgemäßen umweltfreundlichen und wirtschaftlichen Verfahren wird eine stäbchenförmige Struktur mit einer bestimmten Form erhalten. Die stäbchenförmige Struktur weist eine Länge von 3 mm bis 100 mm, bevorzugt von 4 mm bis 50 mm und besonders bevorzugt von 5 mm bis 15 mm auf. Die stäbchenförmige Struktur, auch als Granulat bezeichnet, weist einen Durchmesser von 1 mm bis 10 mm, von 2 mm bis 8 mm und besonders bevorzugt von 3 mm bis 6 mm auf.

Erfindungsgemäß ist auch ein Verfahren vorgesehen, wobei Polyolefin (a), Polyamid (b) und modifiziertes Polyolefin (c) im Extruder gemischt werden, die Verstärkungsfaser (d) wird durch die Schmelze benetzt und das gewonnene Material wird anschließend granuliert. Das so gewonnene Granulat kann mit Farbstoff und/oder Pigment vermischt werden und bei einem weiteren Verarbeitungsprozeß zum gefärbten Bauteil verarbeitet werden.

Erfindungsgemäß wird ein geformter Gegenstand aus dem geschmolzenen, gefärbten langfaserverstärkten Polyolefin Granulat in an sich bekannter weise, wie Spritzguß, Extrusion, Blasformen oder Plastifizierpressen geformt.

Die Struktur des gefärbten langfaserverstärkte Polyolefins ist erfindungsgemäß stabförmig, streifenförmig, bandförmig oder flächenförmig. Bevorzugt ist die Stabform, die erhalten wird, in dem die Oberfläche der Faser, daher der zusammengesetzten gebündelten Faser, kontinuierlich parallel angeordnet mit einem thermoplastischen-Kunststoff zu einem Strang beschichtet werden und dann auf die benötigte Länge geschnitten werden.

Erfindungsgemäß können die Komponenten, ausgenommen die Verstärkungsfaser, in einem Kneter oder einem Extruder schmelzgemischt werden. Die Temperatur wird auf 5 °K bis 100 °K, bevorzugt auf 10 °K bis 60 °K oberhalb der Schmelztemperatur des höher schmelzenden Polymers eingestellt. Die Schmelzemischung ist nach einer Zeit von 30 Sekunden bis 15 Minuten, bevorzugt von 1 Minuten bis 10 Minuten abgeschlossen.

Erfindungsgemäß wird die gefärbte langfaserverstärkte Polyolefin-Kunststoff Struktur zur Herstellung von gefärbten Formteilen verwendet. Die gefärbten Formteile, hergestellt aus der erfindungsgemäßen gefärbten langfaserverstärkten Polyolefin Struktur, weisen hervorragende mechanische Eigenschaften, insbesondere hervorragende Schlagzähigkeit, eine hohe Wärmeformbeständigkeit und geringe Verformbarkeit infolge von Wasserabsorption auf. Die so erzielte Einfärbung zeichnet sich durch gute Gleichmäßigkeit und keine Farbveränderung aus.

Erfindungsgemäß wird die gefärbte langfaserverstärkte Polyolefin-Kunststoff Struktur bevorzugt zur Herstellung von mechanisch und thermisch hochbeanspruchten gefärbten Formteilen, wie Formteile im Kraftfahrzeugbau. Die Erfindung wird nachstehend anhand von Beispielen weiter erläutert.

### Beispiele

Die untersuchten gefärbten langfaserverstärkten Polyolefin-Kunststoff Strukturen wurden nach dem Pultrusionsverfahren hergestellt. Dazu wurde eine Reihe von Glasfaser Bündel (E-Glas, direkt roving 2400 tex) bei kontinuierlichem Abwickeln erhitzt und dann durch eine Schmelzdüse geleitet. Die Schmelzdüse war befüllt mit einer Schmelze aus einem Polypropylen-Kunststoff (MFR 230/216 g pro 10 min = 48, gemessen nach ISO 1133), Polyamid 6 (VZ = 143 ml/g, gemessen in H₂SO₄), maleinsäureanhydrid gepfropftes Polypropylen (Polybond® 3200, Uniroyal Chemical) und Farbmasterbatch (grau, bestehend im wesentlichen aus 30 Gew.-% grau Pigmente, weiß und schwarz und 70 Gew.-% Trägersubstanz). Die Bestandteile der Schmelze wurden zuvor in einem Extruder im Gewichtsverhältnis, wie in Tabelle 1 angegeben geschmolzen. Die Glasfaser Bündel Reihen wurden in den geschmolzenen-Kunststoff in der Schmelzdüse getaucht. In diesem Schritt wurde der Anteil der Glasfaser Bündel auf 40 Gew.-% eingestellt, in dem die Abzuggeschwindigkeit der Glasfaserbündel und die Zugabemengen an geschmolzenen Polypropylen geregelt wurden. Die Polypropylen enthaltende Glasfaser Reihen (Stränge) wurden ausführend aus der Schmelzdüse durch eine Formdüse und eine Formrolle geführt und abgekühlt. Dann wurden die Stränge mit einem Stranggranulator auf eine stäbchenförmige Struktur von 10 mm Länge geschnitten.

Das dabei erhaltene Granulat wurde zu nachstehend beschriebenen Probekörpern spritzgegossen. Die Schlagzähigkeit und andere mechanischen Eigenschaften wurden wie nachstehend beschrieben gemessen.
Bruchdehnung und Zug-E-Modul (Sekante zw. 0,05 % - 0,25% Dehnung) an Normprobe ISO B nach ISO 527,
Schlagzähigkeit Charpy AcU an Normprobe ISO A nach ISO 179,
Biegefestigkeit und Biege-E-Modul an Normprobe ISO A im Dreipunkt-Biegeversuch nach DIN 53 453.
Die gemessenen Ergebnisse gehen aus Tabelle 2 hervor.

### Vergleichsbeispiele

Als Vergleichsbeispiel 1 wurde eine Zusammensetzung ohne Polyamid genommen. Als Vergleichsbeispiel 2 wurde eine Zusammensetzung ohne Pigment genommen. Die Bestandteile der Zusammensetzungen gehen aus Tabelle 1 und die gemessenen Werte gehen aus Tabelle 2 hervor.

**Tabelle 1**

| Bestandteile | Beispiele | | Vergleichsbeispiele | |
|---|---|---|---|---|
| | 1 | 2 | 1 | 2 |
| | Gew.-% | Gew.-% | Gew.-% | Gew.-% |
| Polypropylen | 47.48 | 37.88 | 57.52 | 58.10 |
| Polyamid | 4.90 | 14.60 | 0.00 | 0.60 |
| Modifiziertes Polypropylen | 7.30 | 7.30 | 2.16 | 1.30 |
| Glasfaser | 40.00 | 40.00 | 40.00 | 40.00 |
| Pigment | 0.32 | 0.32 | 0.32 | 0.00 |

**Tabelle 2**

| Mechanische Eigenschaften | Einheiten | Beispiele | | Vergleichsbeispiele | |
|---|---|---|---|---|---|
| | | 1 | 2 | 1 | 2 |
| Zug-E-Modul | [G Pa] | 8.00 | 8.60 | 7.90 | 7.50 |
| AcU | [kJ/m²] | 68.00 | 70.00 | 59.00 | 69.00 |
| Bruchdehnung | [%] | 2.70 | 2.60 | 2.20 | 2.40 |
| Biegefestigkeit | [M Pa] | 161.00 | 190.00 | 152.00 | 161.00 |
| Biegemodul | [G Pa] | 8.60 | 9.50 | 7.80 | 7.90 |

Der Vergleich zwischen den Beispielen 1 und 2 mit Vergleichsbeispiel 2 zeigt, daß jedesmal sehr vergleichbare mechanische Eigenschaften gemessen wurden, trotz der zu erwartenden Verschlechterung aufgrund des Pigmentanteils. Die geringe Erhöhung des Polyamidanteils von 0 Gew.-% auf einen Bereich von 4.0 Gew.-% bis 20 Gew.-%, insbesondere auf 4.90 Gew.-% und 14.60 Gew.-% bewirkt eine nicht zu erwartende und überraschende Verbesserung der mechanischen Eigenschaften. Der Vergleich zwischen Beispielen 1 und 2 mit Vergleichsbeispiel 1 zeigt, daß die Zusammensetzung mit Pigmentanteil aber ohne Polyamid sehr ungünstige mechanische Eigenschaften aufweist. Der Vergleich von Vergleichsbeispiel 1 mit Vergleichsbeispiel 2 zeigt, daß durch Zugabe von Pigment in kleinen Mengen zu einem deutlichen Abfall der Schlagzähigkeit (AcU) führt. Dieser Effekt kann deutlich gezeigt werden, selbst wenn Vergleichsbeispiel 2 einen sehr geringen Polyamidanteil aufweist.

## Patentansprüche

1. Gefärbte langfaserverstärkte Polyolefin-Kunststoff Struktur mit einer Länge von ≥ 3 mm, enthaltend
a) 0.1 Gew.-% bis 90 Gew.-% mindestens eines Polyolefin-Kunststoffes,
b) 0.1 Gew.-% bis 50 Gew.-% mindestens eines Polyamid-Kunststoffes,
c) 0.1 Gew.-% bis 15 Gew.-% mindestens eines modifizierten Polyolefin-Kunststoffes,
d) 5.0 Gew.-% bis 75 Gew.-% mindestens einer Verstärkungsfaser,
e) 0.1 Gew.-% bis 5.0 Gew.-% mindestens eines Farbstoffes und/oder Pigments.

2. Gefärbte langfaserverstärkte Polyolefin-Kunststoff Struktur nach Anspruch 1, enthaltend
a) 4.0 Gew.-% bis 70 Gew.-% mindestens eines Polyolefin-Kunststoffes,
b) 1.0 Gew.-% bis 40 Gew.-% mindestens eines Polyamid-Kunststoffes,
c) 0.8 Gew.-% bis 13 Gew.-% mindestens eines modifizierten Polyolefin-Kunststoffes,
d) 10 Gew.-% bis 65 Gew.-% mindestens einer Verstärkungsfaser,
e) 0.15 Gew.-% bis 3.0 Gew.-% mindestens eines Farbstoffes und/oder Pigments.

3. Gefärbte langfaserverstärkte Polyolefin-Kunststoff Struktur nach Anspruch 1 oder 2, enthaltend
a) 30 Gew.-% bis 58 Gew.-% mindestens eines Polyolefin-Kunststoffes,
b) 4.0 Gew.-% bis 30 Gew.-% mindestens eines Polyamid-Kunststoffes,
c) 1.5 Gew.-% bis 10 Gew.-% mindestens eines modifizierten Polyolefin-Kunststoffes,
d) 19 Gew.-% bis 58 Gew.-% mindestens einer Verstärkungsfaser,
e) 0.2 Gew.-% bis 2.5 Gew.-% mindestens eines Farbstoffes und/oder Pigments.

4. Gefärbte langfaserverstärkte Polyolefin-Kunststoff Struktur nach Anspruch 1, enthaltend
a) 0.1 Gew.-% bis 24 Gew.-% oder 80 Gew.-% bis 90 Gew.-% mindestens eines Polyolefin-Kunststoffes,
b) 12.5 Gew.-% bis 50 Gew.-% mindestens eines Polyamid-Kunststoffes
c) 0.1 Gew.-% bis 0.5 Gew.-% oder 12.5 Gew.-% bis 15 Gew.-% mindestens eines modifizierten Polyolefin-Kunststoffes,
d) 5 Gew.-% bis 16 Gew.-% oder 50 bis 75 Gew.-% mindestens einer Verstärkungsfaser,
e) 0.1 Gew.-% bis 5 Gew.-% mindestens eines Farbstoffes und/oder Pigments enthalten.

5. Gefärbte langfaserverstärkte Polyolefin-Kunststoff Struktur nach einem oder mehreren der Ansprüche 1 bis 4, wobei das Polyolefin (c) mindestens eine der folgenden Gruppen wie Carboxyl-, Carboxylanhydrid-, Metalcarboxylat-, Carboxylester-, Imino-, Amino- oder Epoxygruppe mit 1 Gew.-% bis 50 Gew.-%, bezogen auf den Gesamtanteil aus (a) und (c) enthält.

6. Gefärbte langfaserverstärkte Polyolefin-Kunststoff Struktur nach einem oder mehreren der Ansprüche 1 bis 5, wobei das Polyolefin (a) Polypropylen-Kunststoff ist.

7. Gefärbte langfaserverstärkte Polyolefin-Kunststoff Struktur nach einem oder mehreren der Ansprüche 1 bis 6, wobei das Polyamid (b) Nylon 6 ist.

8. Gefärbte langfaserverstärkte Polyolefin-Kunststoff Struktur nach einem oder mehreren der Ansprüche 1 bis 7, wobei die Verstärkungsfaser (d) Glasfaser ist.

9. Gefärbte langfaserverstärkte Polyolefin-Kunststoff Struktur nach einem oder mehreren der Ansprüche 1 bis 8, die eine Länge von 3 mm bis 100 mm aufweist.

10. Verfahren zur Verbesserung der mechanischen Eigenschaften von gefärbten langfaserverstärkten Polyolefinstrukturen, dadurch gekennzeichnet daß die gefärbte langfaserverstärkte Polyolefinstruktur
a) Gew.-% bis 90 Gew.-% mindestens eines Polyolefin-Kunststoffes,
b) 0.1 Gew.-% bis 50 Gew.-% mindestens eines Polyamid-Kunststoffes,
c) 0.1 Gew.-% bis 15 Gew.-% mindestens eines modifizierten Polyolefin-Kunststoffes,
d) 5.0 Gew.-% bis 75 Gew.-% mindestens einer Verstärkungsfaser,
e) 0.1 Gew.-% bis 5.0 Gew.-% mindestens eines Farbstoffes und/oder Pigments enthält.

11. Verfahren zur Herstellung einer gefärbten langfaserverstärkten Polyolefin-Kunststoff Struktur nach einem oder mehreren der Ansprüche 1 bis 9, wobei
I) Faserbündel durch eine flache Düse, die mit einer Schmelze aus Polyolefin (a), Polyamid (b), modifizierte Polyolefin (c) und Farbstoff und/oder Pigment (e) gefüllt ist, geführt werden,
II) die eingetauchten Faserbündel über eine Formdüse geführt werden,
III) die Faserbündel gekühlt werden,
IV) die Faserbündel nachgeformt werden und
V) die Faserbündel quer zur Laufrichtung auf die Länge der Struktur geschnitten oder als endlose Struktur aufgewickelt werden.

12. Ein geformter Gegenstand aus gefärbter langfaserverstärkten Polyolefin-Kunststoff Struktur nach einem oder mehreren der Ansprüche 1 bis 9, hergestellt durch Spritzguß, Extrusion, Blasformen oder Plastifizierpressen.

13. Verwendung einer gefärbten langfaserverstärkten Polyolefin-Kunststoff Struktur nach einem oder mehreren der Ansprüche 1 bis 9 zur Herstellung von gefärbten Formteilen.

14. Verwendung einer gefärbten langfaserverstärkten Polyolefin-Kunststoff Struktur nach einem oder mehreren der Ansprüche 1 bis 9 zur Herstellung von gefärbten Formteilen im Innenbereich und Außenbereich von Kraftfahrzeugen.
